# EUROPEAN PATENT SPECIFICATION

(11) **EP 0 709 554 B1**
(45) Date of publication and mention of the grant of the patent: **12.04.2000**
(21) Application number: 95116980.4
(22) Date of filing: 27.10.1995
(51) Int. Cl.: F01M 11/02, F01M 3/02

(54) **Internal combustion engine**
Brennkraftmaschine
Moteur à combustion interne

(30) Priority: 27.10.1994 JP 26352294
(43) Date of publication of application: 01.05.1996
(73) Proprietor: YAMAHA HATSUDOKI KABUSHIKI KAISHA, Iwata-shi Shizuoka-ken, 438 (JP)
(72) Inventor: Masuda, Tatsuyuki, c/o Yamaha Hatsudoki K.K., Iwata-shi, Shizuoka-ken (JP)
(74) Representative: Grünecker, Kinkeldey, Stockmair & Schwanhäusser Anwaltssozietät

(56) References cited:
- EP-A- 0 368 430
- EP-A- 0 428 418
- EP-A- 0 555 827
- FR-A- 2 169 088
- FR-A- 2 444 813

## Description

This invention relates to the field of internal combustion engines, and in particular to engine lubrication. More specifically, the invention relates to an internal combustion engine comprising the features of the preamble portion of claim 1.

Automobile engines are configured to be started by means of a starter gear on a starter motor that engages a ring gear formed on the outside of a flywheel attached to one end of the crankshaft. Some engines of this type are also equipped with a balancer device that includes a balancer shaft that runs parallel to the crankshaft and which rotates at the same speed as the crankshaft in order to reduce engine vibrations.

In addition, there are cases when the foregoing engines employ a direct lubrication device which directly provides lubricating oil to areas such as the crankshaft bearings and the sliding surfaces of the pistons. This type of lubrication device employs a lubricating oil pump that is driven by the rotation of the crankshaft, and lubricating oil conduits communicate with the outlets of the pump in order to provide lubricating oil to areas requiring lubrication. Switching valves are located amid said conduits to switch the flow to the areas being lubricated or to the lubricating tank, wherein the return openings of said valves communicate with the lubricating oil tank.

In cases where a balancer shaft has been included on engines equipped with the foregoing starter motor starting devices, it is necessary to avoid interference with the balancer chamber that houses the foregoing balancer shaft when securing space for the location of the foregoing starter motor, thereby creating the concern that the overall size of the engine must be increased.

In addition, when using the above described type of lubricating device, when there are a large number of areas requiring lubrication, the conduit configuration for the numerous return conduits from the switch valves to the lubricating oil tank becomes quite complex. Also, in cases where the switch valves are located on the engine and the lubricating oil tank on the vehicle, it is necessary to make the foregoing return conduit flexible, and this too complicates the conduit configuration.

An engine and lubrication system of this conventional type and comprising the features of the preamble of claim 1 is known from EP-A1-0 428 418.

Accordingly, it is an objective of this invention to provide an internal combustion engine of the afore-indicated type which allows for an advantageous configuration of the engine relative to auxiliary peripheral engine components and which, in particular provides an improved lubricating system, wherein complexity of a conduit arrangement is reduced while the engine has several areas to be lubricated directly.

The afore-indicated objective is performed by an internal combustion engine as indicated in claim 1.

The oil return rail allows to bring together several oil return conduits into a single collecting box, so that only a single outlet of said return rail and a single return line are required for directing oil to be returned to an oil return receiving space such as an oil tank.

The inventive lubricating system is simple in construction and can be mounted easily on the engine.

According to a preferred embodiment of such an engine having an inventive lubricating system, said switch valves are formed as three-way solenoid switch valves with an oil inlet connected with said lubricating pump, an oil supply outlet opening connected with the areas to be lubricated and an oil return outlet opening connected with said oil return rail.

Thus, the lubricating system defines a lubricating cycle starting with a lubricating oil tank as an oil resource which is connected by means of an intake conduit to the intake opening of a lubricating oil pump, which has outlet openings connected via switch valves to the various areas of the engine to be lubricated, wherein said switch valves are connected via said oil return rail and one return line to the foregoing lubricating oil tank. Said switch valves allow an exactly controlled supply of oil to the areas to be lubricated.

According to a further preferred embodiment, said oil supply conduit arrangement comprises oil conduits connected to said lubricating pump, and said switch valves for each of said engine areas to be directly lubricated, respectively. Thus, each lubricated area is provided with a respective supply and return line.

According to a further preferred embodiment, each of said switch valves is controlled by an electronic control unit, said electronic control unit determines whether a predetermined amount of oil supply is reached for said areas to be lubricated, so that said switch valves are switched and the oil is diverted to said oil return rail in case the predetermined amount has been reached.

According to a further preferred embodiment, both said single return line and said single supply line are respectively formed with a flexible line passage by means of a hose.

Therefore, flexible conduits are able to absorb the vibrations between the engine and the vehicle.

According to another preferred embodiment, said lubricating oil tank is mounted on a vehicle body, while said lubricating oil pump, a check valve, a strainer, said switch valves and said oil return rail are mounted on the engine.

Such a provision defines a well-organized lubricating system, so that the required mounting space for said lubricating system will be sufficient, although said lubricating system comprises many parts.

According to yet another preferred embodiment, said lubricating oil tank is located at a height which is above the height of the areas to be lubricated, and said areas to be lubricated are above a height of supply outlet openings of said switch valves, and said switch valves are located at a height which is above said lubricating oil pump. This eliminates the gradual return of lubricating oil to the tank, prevents air from entering the conduits and eases air bleeding operations. Furthermore, lubricating oil is prevented from flowing downward to the areas to be lubricated in the case of leaky seals when the engine is stopped, and the accuracy and amount of lubricating oil is improved.

Said areas to be directly lubricated are defined by main crankshaft bearings and the sliding surfaces of the pistons.

According to a further preferred embodiment, said engine is disposed within said vehicle in a vertically inclined manner, whereby the top portion of the engine is inclined towards the rear of the vehicle. Therefore, a starter motor can be located in front of the engine at a height which is about the same height as a crankshaft.

Since the balancer shaft is positioned below the crankshaft according to an embodiment, the balancer chamber is formed as a bulging protrusion below the crank chamber. Accordingly, there is almost no space for mounting the starter motor below the engine. On the other hand, by tilting the engine overall backwards in mounting it, a comparatively large space is generated on the top side of the front of the engine. The positioning of the starter in that area, according to the present invention, makes it possible to locate the starter motor while inhibiting increases in the overall engine size.

Further preferred embodiments of the present invention are laid down in the further subclaims.

Hereinafter, the present invention is explained in greater detail by means of an embodiment thereof in conjunction with the accompanying drawings, wherein:
Figure 1 shows a right-side view mounting structure of the internal combustion engine for a two-cycle diesel engine within a vehicle according to an embodiment of this invention,
Figure 2 is a front view of the mounting structure of said internal combustion engine within said vehicle according to figure 1,

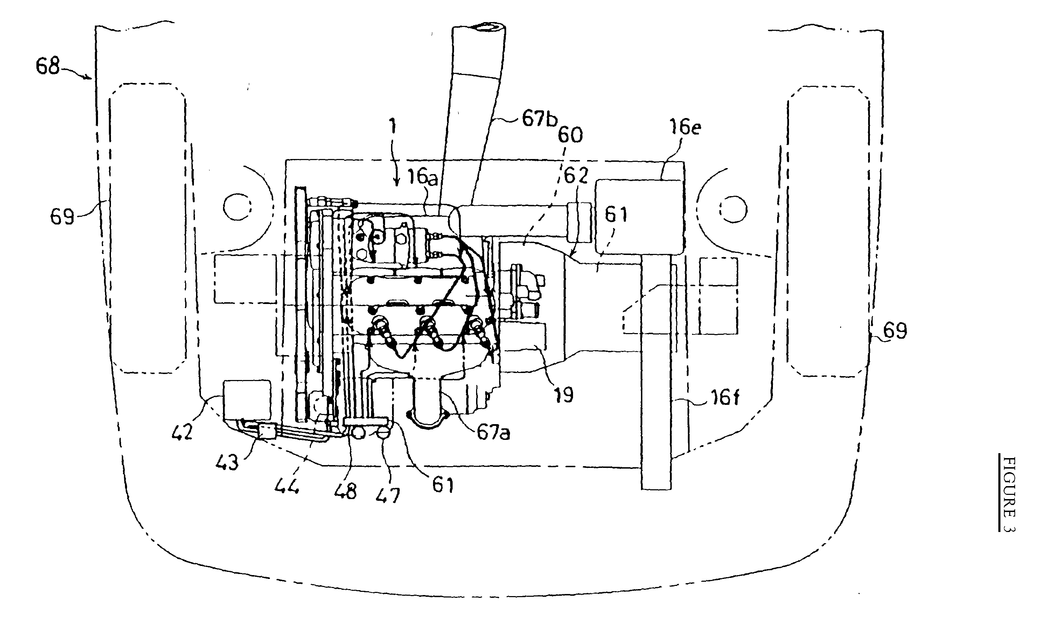

Figure 3 is a top view of the mounting structure of said internal combustion engine within said vehicle according to figure 1,
Figure 4 is a right-side view of the internal combustion engine according to figure 1,
Figure 5 is a front view showing the mounting structure of the solenoid valves and the oil return rails relatively to each other with respect to an internal combustion engine according to figure 1,

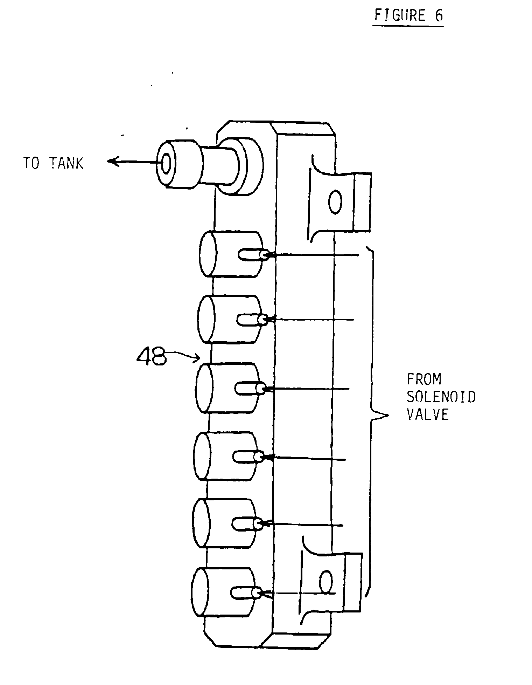

Figure 6 is a perspective view showing the structure of the oil return rail according to figure 5,

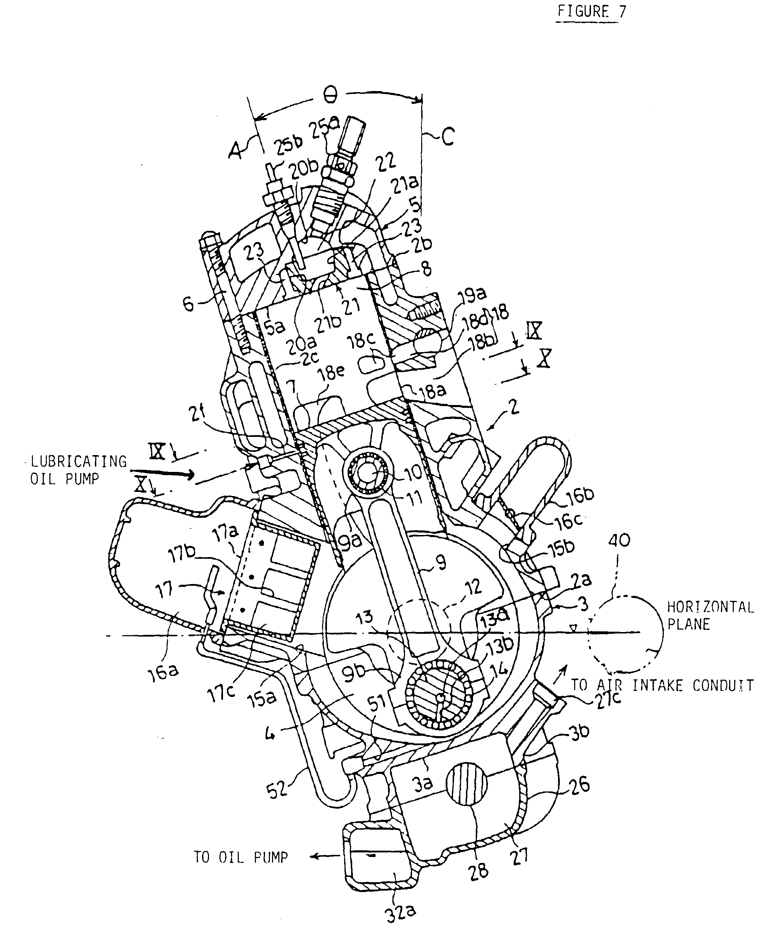

Figure 7 is a right-side sectional view (along line VII-VII of figure 8) with respect to the internal combustion engine according to figure 1,
Figure 8 is a sectional front view of said internal combustion engine according to figure 1,

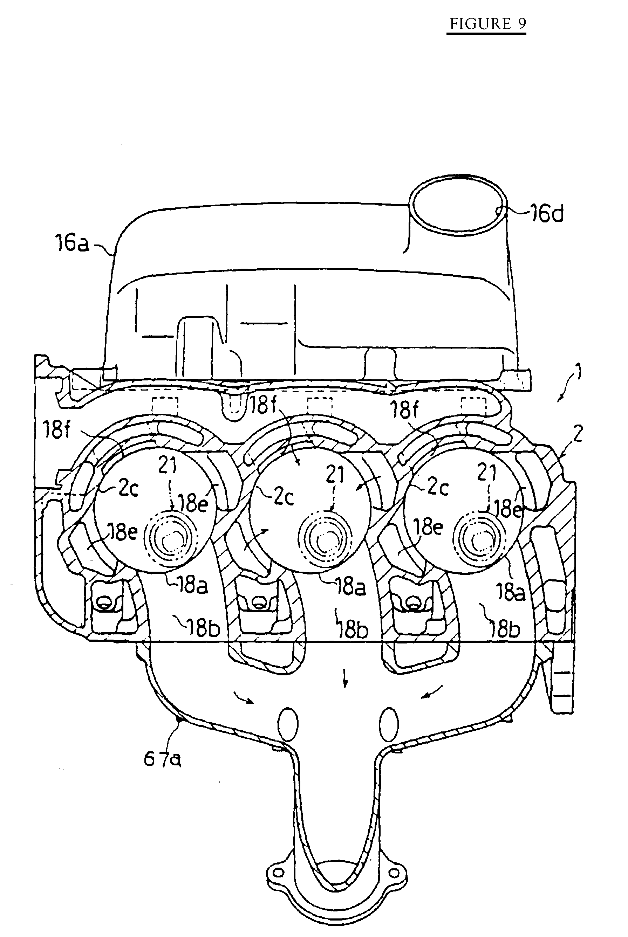

Figure 9 is a sectional top view (along line IX-IX of figure 7) of said internal combustion engine according to figure 1,

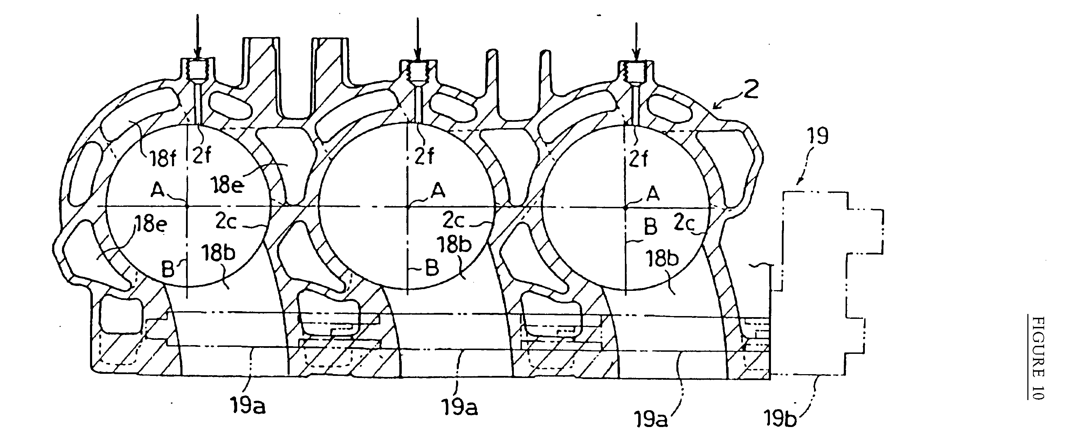

Figure 10 is a sectional top view (along line X-X of figure 7) of said internal combustion engine according to figure 1, and

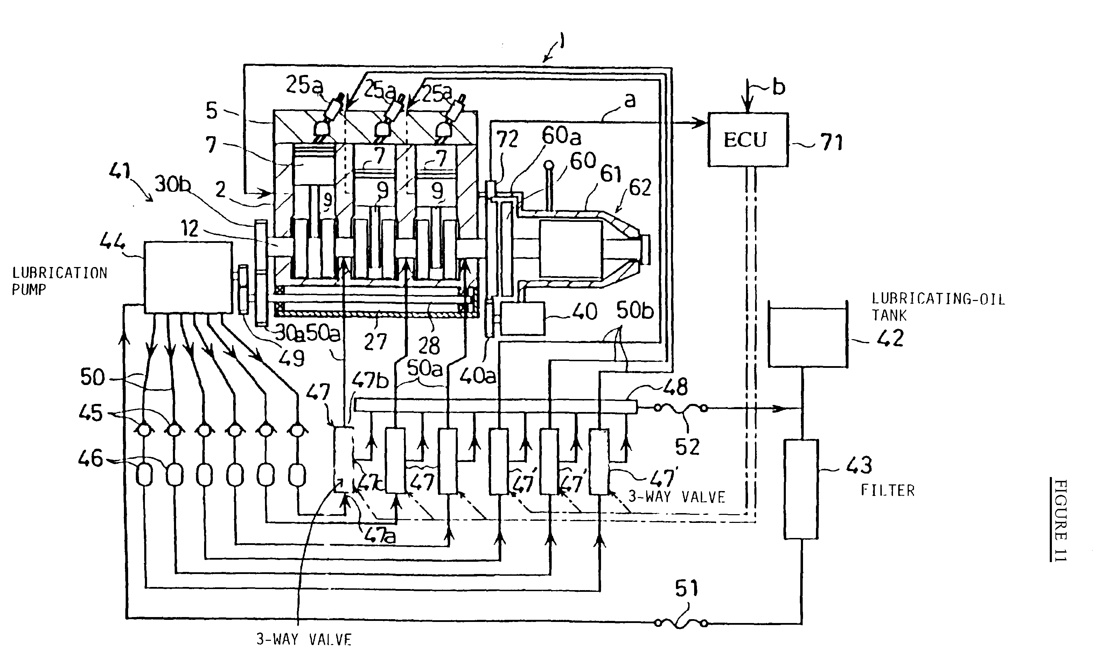

Figure 11 is a schematic component overview of the lubricating system of said internal combustion engine according to figure 1.

In this example, references to front and back or left and right shall mean front and back and left and right when viewed in the direction of vehicle travel.

In the Figures, 1 represents a water cooled, in-line, three cylinder, two-cycle diesel engine. The crankcase 3 is attached to the bottom surface 2a of the cylinder block 2 of the engine 1, and three individual crank chambers 4 for each of the cylinders are formed by the bottom of the cylinder block 2 and the crankcase 3. The cylinder head 5 is also mounted to the top surface 2b of the foregoing cylinder block 2 and is held in place by a plurality of head bolts 6.

Three cylinder bores 2c have been formed in a row in the foregoing cylinder block 2, and pistons 7 have been slidably inserted in each of said cylinder bores 2c. The primary combustion chambers are formed in the space bounded by the top surface of the pistons 7, the mating surface 5 of the foregoing cylinder head 5, the foregoing cylinder bores 2c and the bottom surface of the hot plugs 21 to be described below. The foregoing pistons 7 are also linked to the small ends 9a of connecting rods 9 by piston pins 10 and needle bearings 11. The large ends 9b of said connecting rods 9 connect to the crank pins 13 on the crankshaft 12 by means of needle bearings 14.

The foregoing crankshaft 12 is axially supported by ball bearings 46 and roller bearings 39. An oil hole (not show) is present in the cylinder block 2 and passes to the foregoing roller bearings 39 (a lubricated area), with a lubricating oil pump 44 to be described below directly supplying lubricating oil to said oil hole. The bearings 14 of the crank pins 13 of the foregoing crankshaft 12 are supplied with lubricating oil that is delivered from the supply to the foregoing bearings 39 by means of centrifugal force and via the branch conduit 13b of the oil introduction conduit 13a.

Three sets of air intake openings 15a have been formed in the bottom of the foregoing cylinder block 2 that pass into the various crank chambers 4 described above. These air intake openings 15a are each connected to an air intake manifold 16a that is common to all cylinders. An air cleaner 16e and air introduction pipe 16d are connected to the connection opening 16d of this air intake manifold 16a. In addition, each of the foregoing crank chambers 4 and the foregoing air intake manifold 16a communicate through oil return holes 51 located in the bottom of the crank chambers 4 and hose 52. The oil building up in the crank chambers may thus be returned to the inside of the air intake manifold.

Reed valves 17 are additionally installed in each of the foregoing air intake openings 15a. The design of the reed valves 17 is such that a hole 17b formed in the valve body 17a is covered by a valve plate 17c. These reed valves 17 are automatically opened by negative pressure in the combustion chamber 4 upon the rise of the foregoing pistons 7, thereby introducing air into the crank chambers; upon the descent of the piston, they are closed by the positive pressure to prevent air from being blown back through them.

Scavenging adjustment openings have been additionally formed in the foregoing cylinder block 2 on the side opposite from the foregoing air intake openings 15a and pass into each of the foregoing crank chambers. Said scavenging adjustment openings communicate with a common scavenging chamber 16b, and a scavenging control valve 16c is located in the connection opening area of said scavenging chamber 16b. When said scavenging control valve 16c is opened, the crank chamber 4 linked to said connection opening is open to the scavenging chamber 16b, thereby effectively increasing the volume of the crank chamber and decreasing the scavenging pressure. The EGR gas inside increases and the combustion temperature decreases. When the foregoing scavenging control valve 16c is closed, then the crank chambers assume their normal volume where primary compression increases and adequate scavenging takes place.

A pair of exhaust ports 18 is also present for each cylinder in the top of the foregoing cylinder block 2. These exhaust ports 18 are composed of main exhaust openings 18a which lead to outside the cylinder through main exhaust ports 18b, and of a pair of auxiliary exhaust openings into the top of the foregoing exhaust openings 18a, which lead to the outside via auxiliary exhaust ports 18d merging midway into the foregoing main exhaust port 18b. The exhaust ports 18 for each cylinder are connected to a single exhaust manifold 67a, and the exhaust manifold 67a is in turn connected to an exhaust pipe 67b which extends to the rear of the vehicle.

The foregoing auxiliary exhaust ports 18d are opened and closed by means of an exhaust control device 19. This exhaust control device 19 is used to change the exhaust timing and the compression ratio, and it is inserted across the auxiliary exhaust ports 18d of the foregoing cylinder block 2, and it is further equipped with a drive mechanism 19b driving said exhaust valves 19a open and closed over the foregoing auxiliary exhaust ports 18d. The above described exhaust valves 19a are formed from an arc-shaped valve unit on a round rod, and they are linked together by a linking unit. The foregoing drive mechanism 19b links a drive shaft to the outside edge area of the above described exhaust valves, and said drive shaft is linked by a gear set to a drive motor.

A pair of scavenging openings 18e are present on both sides of the foregoing main exhaust openings 19a of the foregoing cylinder block 2 are, and facing the foregoing main exhaust openings 18a are opposing scavenging openings 18f. These scavenging openings 18e, 18f are connected to the crank chambers 4 for the cylinders by means of scavenging ports.

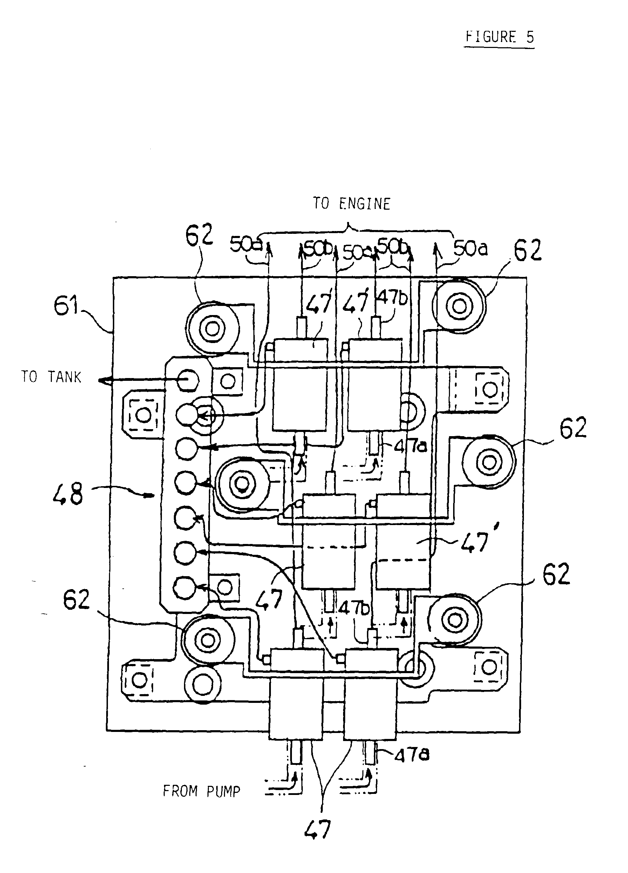

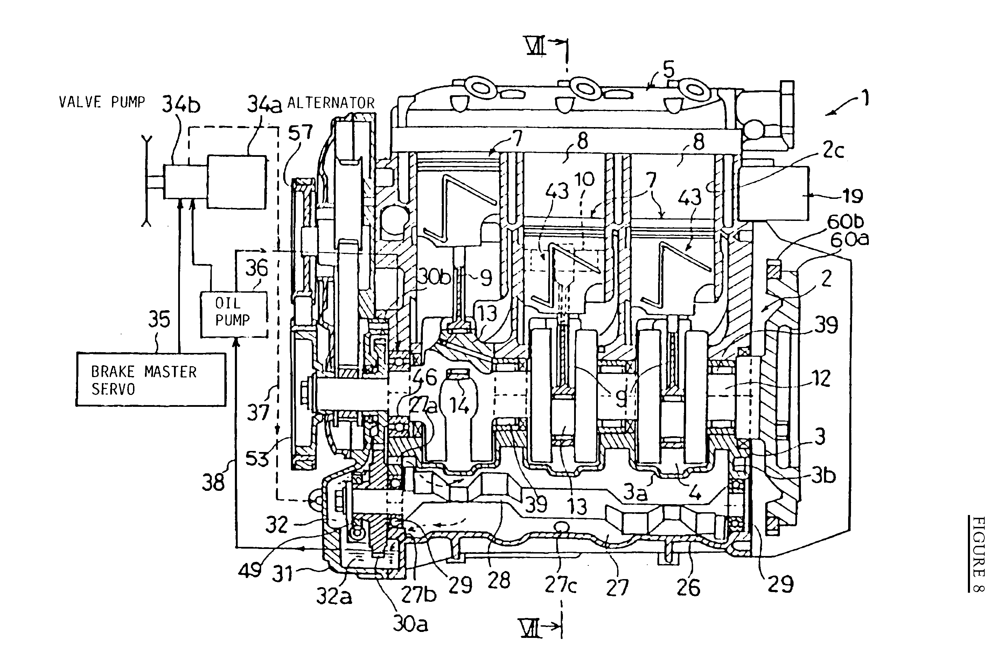

One oil hole 2f for each cylinder has been formed in the foregoing cylinder block 2 in order to supply lubricating oil to the sliding surface of the pistons (a lubricated area). Said oil holes 2f pass through the cylinder block 2 in a direction perpendicular to the crankshaft, and, when viewed in the direction of the cylindrical axis (see Figure 8), they are displaced from said cylindrical axis a toward the crankshaft direction; and when viewed from the crankshaft direction (see Figure 5), they are positioned between the rings on the pistons 7 when the pistons are at their lower dead points.

A box-shaped boss 3b is present around the perimeter of the lower wall 3a of the foregoing crankcase 2, and opens downward. A box shaped balancer cover 26 can be attached to the top opening of said boss 3b to create a balancer chamber 27 which protrudes downward. A balancer shaft 28 housed inside the balancer chamber 27 runs parallel to the crankshaft 12, and both ends of the shaft are axially supported by bearings 29 at the mating surface between the foregoing boss 3b and the balancer cover 26.

One end of the balancer shaft 28 protrudes outside the foregoing balancer chamber 27, and gears 30a, 30b on the protruding end drive the balancer shaft 28 to rotate at the same speed, but in the opposite direction as the foregoing crankshaft 12. These gears 30a, 30b as well as the end surfaces of the foregoing cylinder block 2, crankcase 3 and balancer cover 26 are located inside the gear chamber 32 which is covered by a gear cover 31. Through-holes 27a and 27b in the top and bottom of said gear chamber 32 connect to the inside of the foregoing balancer chamber 27.

Auxiliary combustion chambers are formed in the mating surface 5a area of the foregoing cylinder head 5. These auxiliary combustion chambers 22 are composed of the concave area 21a of each hot plug 21 that is inserted into the plug retention hole 20a of the cylinder head 5 and the concave area 20b formed in the cylinder head 5. Each of said auxiliary combustion chamber 22 is connected to the main combustion chamber 8 by means of a linking hole 21b. Bolts 23 hold the hot plugs 21 in place, and these pass through the top surface of the cylinder head 5 and are fastened by nuts. 25a is a fuel injection valve and 25b is a glow plug.

Since diesel engines such as the one in the present embodiment do not have throttle valves, there is inadequate air intake negative pressure for the brake master servo 35. Therefore a vane pump (vacuum pump) 34b to generate negative pressure is coaxially mounted on the alternator 34a, which is driven by the crankshaft. Said vane pump 15 supplied with lubricating oil by an oil pump 36 which is distinct from the above described lubricating oil pump 44.

In the present embodiment, air drawn in from the brake master servo 35 is mixed with the foregoing lubricating oil to create a mixture. Accordingly, this embodiment also uses the above described balancer chamber 27 as a breather chamber for the separation of the lubricating oil from the foregoing mixture. Therefore the outlet of the foregoing vane pump 34b is connected to the foregoing gear chamber 32 by the mixture conduit 37, and an oil conduit 38 connects an oil return opening in the reservoir area in said gear chamber 32 to the above mentioned oil pump 36.

The majority of the lubricating oil in the mixture expelled from the above mentioned vane pump 34b is separated and drops out into the gear chamber 32, and the oil that remains in the mixture flows through the top linking hole 27a into the above mentioned balancer chamber 27, where the lubricating oil is separated, and drains through the bottom hole 27b and is returned to the oil reservoir area of the gear chamber 32. The air that is separated from the foregoing lubricating oil is either passed through the air exit opening 27c to the inside of the air intake manifold 16a via a breather hose (not shown), or it is expelled into the atmosphere.

A crank pulley 53 is attached to the right end of the foregoing crankshaft 12. A single belt 54 spans that pulley 53 and supplies the rotational drive to a compressor pulley 55a which drives the compressor 55 for the air conditioning, to the pulley 56a for the alternator 56, the pulley 57a for the water pump 57, and the pulley 58a for the power steering pump 58. 59 represents an idler which maintains the proper angle and tension for the belt 54.

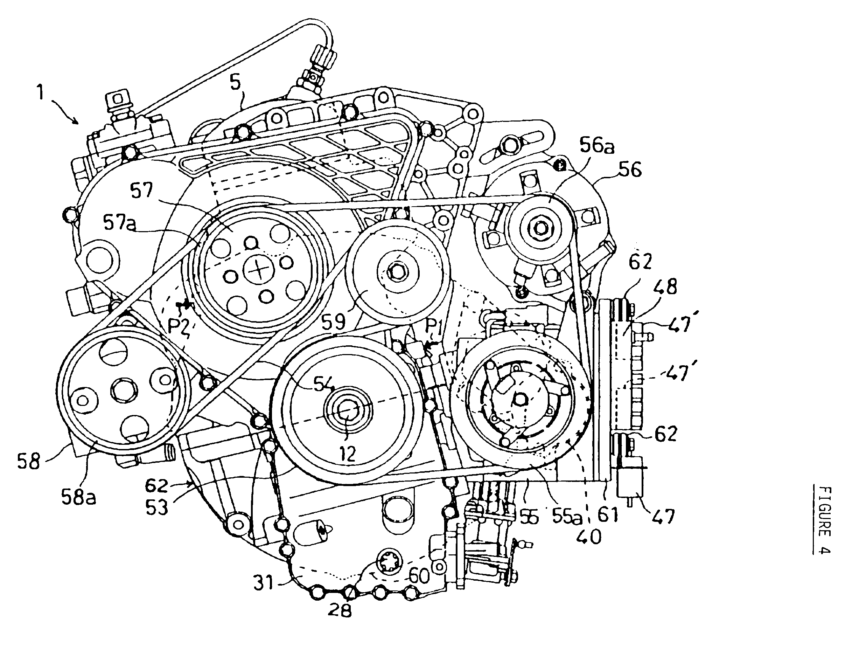

Connected to the left side wall of the foregoing cylinder block 2 is a transmission 62 that contains a clutch mechanism 60 and speed change gears 61. The maximum diameter of the transmission 62 is in the area of the clutch mechanism 60, and, as shown by the broken line in Figure 4, the size of this area is set to span the pulleys 57, 59 and 55a.

The flywheel 60a that comprises the foregoing clutch mechanism 60 is connected to the left end of the foregoing crankshaft 12. A ring gear 60b is attached to the outside circumference of said flywheel 60a, and the starter gear 40a of the starter motor can engage the ring gear 60b. As will be described below, this starter motor 40 is mounted so that it is in front of the above mentioned balancer chamber 27 and is positioned at approximately the same height as the crankshaft 12.

In this embodiment, the engine 1 is mounted transversely and tilts rearward in the vehicle 68. To wit, the crankshaft 12 is deployed in the width direction of the vehicle, and the cylinder axis A is tilted rearward at an angle θ with respect to the perpendicular. This rearward tilting mounting arrangement positions the balancer chamber 27 in front of the crankshaft, and positions the foregoing starter motor to the front of the balancer chamber 27 and at approximately the same height as the crankshaft 12. Also, 69 represents the front wheels, 70 the axle, and 74 the radiator.

The engine 1 in the present embodiment is equipped with a lubrication device 41 which intermittently and directly supplies lubricating oil to the various areas requiring lubrication. This lubrication device is composed of an oil tank 42 and oil filter 43 which are mounted to the vehicle, further a lubricating oil pump 44, check valves 45, strainers 46, three-way solenoid valves 47, and a lubricating oil return rail mounted to the engine. The lubrication device 41 supplies the required amount of lubricating oil to the above described various areas requiring lubrication by means of an ECU 71 that controls the foregoing three-way solenoid valves 47.

The above described lubricating oil pump is positioned at approximately the same height as the above mentioned balancer shaft 28 of the above mentioned gear cover 31, and it is rotatably driven by a drive gear 49 that is attached to the outside end of said balancer shaft 28 which is located inside the gear chamber 32. Since the above mentioned lubricating oil pump 44 is a mechanically driven, 6-outlet pump, the above mentioned check valves, strainers, and three-way solenoid valves 47 are located mid way in each of the lubricating oil supply conduits 50 connected to said outlets.

Lubricating oil that is introduced through the oil inlet 47a of these solenoid valves 47 is switched by the switching valve to flow either through the oil supply opening 47b or through the oil return opening 47c. The above mentioned oil supply openings 47a are connected to various areas that require lubrication such as the above described sliding surfaces of the pistons, the crankshaft journal areas, etc. The oil return openings 47c of all of the above mentioned solenoid valves 47 are connected to a common lubricating oil return rail 48.

The oil filter 43 mounted on the vehicle side as described above also is connected to the lubricating oil pump 44 mounted on the engine side by means of a single flexible intake hose 51 which absorbs the relative movement between the two due to engine vibrations. Also, the foregoing lubricating oil return rail 48 is connected to the lubricating oil tank 42 by means of a single flexible return hose 52 which similarly absorbs the relative movement between the two.

The height relationships among the various component parts of the foregoing lubrication device 41 are such that the lubricating oil tank 42 > areas to be lubricated > solenoid valves 47 > > lubricating oil pump 44. In addition, the foregoing 6 three-way solenoid valves are mounted on a support plate 61 affixed to the outer wall surface of the foregoing compressor 55 using a resilient material 62 that absorbs vibrations.

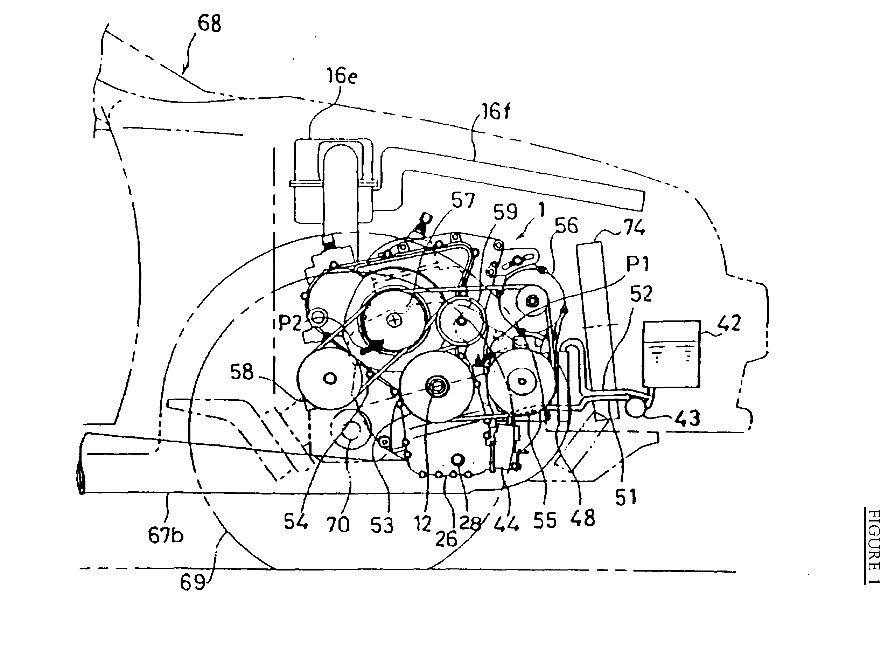

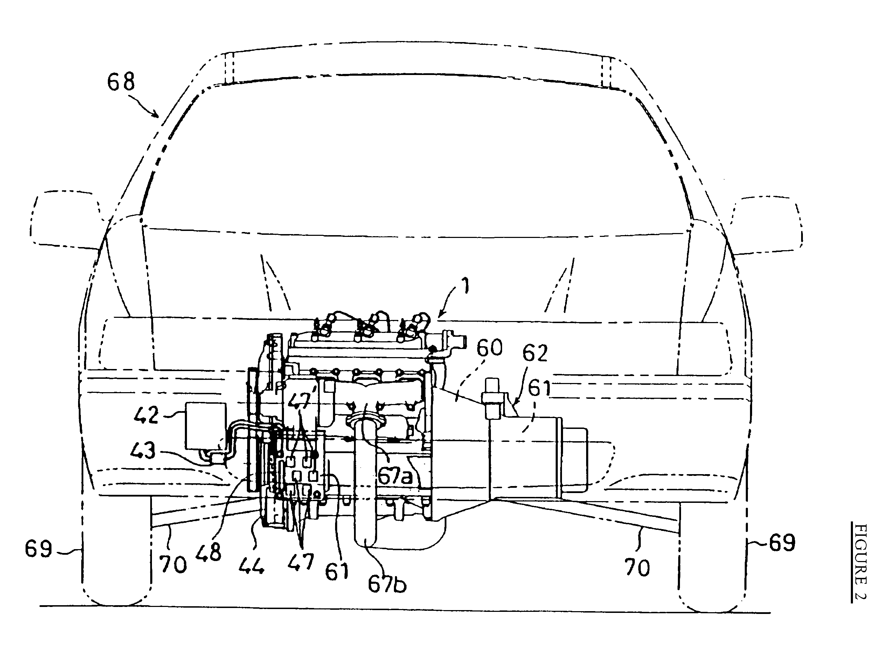

Here, as is shown in Figures 2 and 5, from among the above mentioned 6 solenoid valves 47, the two upper level valves and the one mid-level valves (47') supply oil to the oil holes 2f for the sliding surface of the foregoing pistons (see P2 in Figures 1 and 4 for the height of the lubricating oil supply positions), while the remaining mid-level and the two lower level valves (47) provide lubricating oil to the oil hole to the foregoing roller bearings 39 (see P1 in Figures 1 and 4 for the height of the lubricating oil supply positions). The height of the supply opening 47b of the solenoid valves 47' for the sliding surfaces of the pistons is less that the above described supply height P2, and the height of the supply opening 47b of the solenoid valves 47 for the crankshaft is less than the above mentioned supply height position P1.

Next, the operational effects of the present embodiment will be described.

When the ignition key of the engine 1 of this embodiment is turned to the "start" position, the starter motor 40 rotates and the starter gear of said motor engages the ring gear 60b of the flywheel 60a to rotate the crankshaft 12, thereby causing the engine 1 to start.

Also, the balancer shaft 28, which rotates at the same speed but in the opposite direction as the crankshaft 12, rotates the lubricating oil pump 44 of the lubricating device 41 of this embodiment. This lubricating oil pump 44 pumps lubricating oil from the lubricating oil tank 42 under pressure. The pressurized lubricating oil from the said pump 44 is then channeled by the three-way solenoid valves 47 either to the areas requiring lubrication or to the lubricating oil return tank 42.

The foregoing solenoid valves 47 are switched under the control of ECU 71. Said ECU 71 determines the accumulated lubricating oil consumption per each revolution of the engine 1 based upon an engine RPM signal *a* from an engine RPM sensor 72, and a load signal *b* from an accelerator aperture detection sensor and then supplies switching signals S1, S2 for the required amount of time to cause the above mentioned three-way solenoid valves 47 to switch to the pump outlet side 47b for the prescribed period of time. Thereby lubricating oil is supplied through the supply lines 50a to the above mentioned bearings 39, or through supply lines 50b to the sliding areas of the above mentioned pistons.

When the required accumulated value has been reached, the foregoing solenoid valves 47 are switched to the return opening 7c side, and, during this time, lubricating oil from the pump 44 is diverted to the oil return rail 48. From there, it passes through a single flexible return hose 52 to be returned to between the lubricating oil tank 42 and the filter 43. It would also be possible to directly return this oil to the lubricating oil tank, and this invention includes that contingency as well.

With regard to the present embodiment, which functions as described above, the location of the balancer shaft 27 beneath the crankshaft 12 allows the balancer chamber 27 to be formed as a bulging protrusion below the crank chamber 4. Accordingly almost no space is available for locating equipment below the crank chamber. On the other hand, since the engine was tilted overall toward the rear, there is a relatively large amount of space on the top front side of the engine. In the present embodiment, the starter motor 40 is located in this space at approximately the same height as the crankshaft, thereby inhibiting any need to increase the overall size of the engine for the location of the starter motor 40 when a balancer shaft 28 has been incorporated.

In addition, the oil tank 42 and the oil filter 43 have been mounted on the vehicle side, while the lubricating oil pump 44, the check valves 45, the strainers 46, the three-way solenoid valves 47, and the oil return rail 48 have been mounted to the engine; in other words, the component parts of the lubricating device 41 have been divided between the vehicle side and the engine side, thereby making it easy to secure the space required for the comparatively large lubricating device 41.

On the other hand, when the six 3-way solenoid valves 47 have been mounted to the engine and positioned at some distance from the lubricating oil tank 42 mounted on the vehicle, it is possible that some of the lubricating oil would, under its own weight, flow back from said solenoid valves 47 to the lubricating oil tank 42. In addition, the conduits between them must be flexible to absorb the vibrations between the engine and the vehicle, so there are concerns about the conduit configuration becoming overly complex. This embodiment addresses these issues by connecting all of the solenoid valves 47 to a single oil return rail 48, and then by connecting said oil return rail 48 by a single oil hose 52 to the lubricating oil tank 42. As a result, just one return line is able to service multiple solenoid valves 47, thereby avoiding complexity in the above described conduit structure.

In affixing the foregoing solenoid valves 47 to the engine, they are mounted on a support plate 61 affixed to the side wall of the compressor 55 by means of a resilient material 47, which reduces the transmission of vibrations from the engine.

Further, the lubricating oil pump is located beneath the crank chamber and is driven by the balancer shaft 28 which allows moving the oil pump 44 away from the high temperature areas near the cylinder head 5 and the cylinder bores 2c to a comparatively low temperature area. This feature prevents the problem of vapor lock caused by the generation of air bubbles in the lubricating oil due to high temperatures in the area of the lubricating oil pump.

Furthermore, the lubricating oil pump 44 and the solenoid valves 47, etc., have been located on the lower part of the engine in close proximity to each other, thereby enabling the shortening of the various conduits between them as a means to simplify the conduits and to avoid the problem of conduit-related drops in oil pressure.

On the other hand, the location of the lubricating oil pump 44, solenoid valves 47, etc. beneath the engine might cause concern relating to their maintenance, but the inspection and maintenance of these areas can be performed by jacking or raising the vehicle and inspecting from underneath, and therefore this arrangement has almost no adverse effect on maintainability.

Also, in locating the three-way solenoid valves 47, the height of the supply openings 47b is lower than the heights P1, P2 of the areas to be lubricated, and this configuration allows higher accuracy in the supply of lubricating oil. For example, when the engine is stopped, seal leakage does not result in the downflow of lubricating oil under its own weight due to the lower height of the supply openings 47b in this embodiment. This design measure prevents lubricating oil from flowing downward upon the areas to be lubricated due to seal leakage.

Further, in designing the lubricating oil supply conduits, their respective heights were set so that the height of the lubricating oil tank 42 > oil hole 2f > solenoid valves 47 > lubricating oil pump 44, thereby eliminating the gradual return of lubricating oil to the tank 42, preventing air from entering the conduits, and easing air bleeding operations.

In addition, although the foregoing description used the example of a two-cycle diesel engine, the invention may also be applied to two-cycle gasoline engines, four-cycle diesel engines, or four-cycle gasoline engines with similar effectiveness.

The overall engine is mounted to tilt rearward in mounting, and the starter motor has been positioned beneath the crankshaft and in front of the balancer shaft at about the same height as the crankshaft, thereby locating the balancer shaft below the crankshaft to reduce the need for increasing the overall size of the engine from the need to mount the starter motor in the limited space under the engine.

Furthermore, the oil tank has been mounted on the vehicle side, while the lubricating oil pump and the various switching valves, etc. have been mounted on the engine side to ease the securing of space for the location of the relatively large sized oil lubrication device. In addition, by connecting all the switching valves to a single oil return rail for returning oil to the lubricating oil tank, and by connecting said oil return rail to the lubricating oil tank by means of a single flexible return conduit, complexity in the conduit configuration is avoided due to the plurality of the switching valves being serviced by a single flexible conduit.

Moreover, the supply openings of the switching valves are positioned lower than the areas to be lubricated, lubricating oil is prevented from flowing downward to the areas to be lubricated in the case of leaky seals when the engine is stopped, and the accuracy in the amount of lubricating oil supplied is improved.

## Claims

1. Internal combustion engine, in particular a two-stroke engine of the crankcase compression type, including a lubricating system, said lubricating system comprising:
- a lubricant oil tank (42),
- an oil supply conduit arrangement for connecting said oil tank (42) with engine areas to be lubricated,
- a lubricating oil pump (44) for supplying lubricant from said oil tank (42) to said areas to be lubricated via said oil supply conduit arrangement, and
- an oil return arrangement for returning lubricant back to said oil tank (42),
**characterized in that**
- said oil return arrangement comprises an oil return rail, having a plurality of inlets for collecting oil and a single outlet for connecting it through a single return line (52) to said oil tank (42),
- said inlets of said oil return rail being connected to switch valves (47) for selectively supplying oil to the points of the engine which are to be lubricated, respectively,
- said switch valve (47) and said single oil return rail (48) being mounted on said engine via a common support plate (61).

2. Internal combustion engine according to claim 1, **characterized in that** said switch valves (47) are formed as three-way-switching valves with an oil inlet (47a) connected with said lubricating oil pump (44), an oil supply outlet opening (47b) connected with the areas to be lubricated and an oil return outlet opening (47c) connected with said oil return rail (48).

3. Internal combustion engine according to claim 1 or 2, **characterized in that** said switch valves (47) are solenoid valves.

4. Internal combustion engine according to one of claims 1 to 3, **characterized in that** said oil supply conduit arrangement comprises oil conduits (50) connected to said lubricating oil pump (44), and said switch valves (47) for each of said engine areas to be directly lubricated, respectively.

5. Internal combustion engine according to claim 4, **characterized in that** each of said oil conduits (50) is equipped with a check valve (45) and a strainer (46).

6. Internal combustion engine according to at least one of claims 1 to 5, **characterized in that** each of said switch valves (47) is controlled by an electronic control unit (71), said electronic control unit (71) determining whether a predetermined amount of oil supply is reached for said areas to be lubricated, so that said switch valves (47) are switched and the oil is diverted to said oil return rail (48) in case said predetermined amount has been reached.

7. Internal combustion engine according to claim 6, **characterized in that** said electronic control unit (71) determines the accumulated lubricating oil consumption per each revolution of the internal combustion engine (1) based upon an engine round per minute signal (a) from an engine (RPM) sensor (72), and a load signal (b) from an accelerator aperture detection sensor and then supplies switching signals (S1, S2) for the required amount of time to cause the switch valves (47) to switch to the supply outlet opening (47b) for the prescribed period of time.

8. Internal combustion engine according to at least one of the preceding claims 1 to 7, **characterized in that** said single return line (52) and a single supply line (51), which connects an oil filter (43) and said lubricating oil pump (44), include a flexible conduit passage.

9. Internal combustion engine according to claim 8, **characterized in that** said flexible conduit passage is formed with a hose.

10. Internal combustion engine according to at least one of the preceding claims 1 to 9, **characterized in that** said single return line (52) is connected with said lubricating oil tank (42).

11. Internal combustion engine according to at least one of the preceding claims 1 to 10, **characterized in that** said lubricating oil tank (42) is mounted on a vehicle body.

12. Internal combustion engine according to at least one of the preceding claims 1 to 11, **characterized in that** said lubricating oil pump (44), said check valves (45), said strainers (46), said switch valves (47), and said oil return rail (48) are mounted on the engine (1).

13. Internal combustion engine according to claim 12, **characterized in that** said support plate (61) is affixed to a front side wall of a compressor (55) of the internal combustion engine (1) by means of a resilient material, which reduces the transmission of vibrations from the engine (1).

14. Internal combustion engine according to at least one of claims 2 to 13, **characterized in that** said supply outlet openings (47b) of said switch valves (47) are located at a height which is below the height of the areas to be lubricated.

15. Internal combustion engine according to at least one of the preceding claims 1 to 14, **characterized in that** said lubricating oil tank (42) is located at a height which is above the height of the areas to be lubricated.

16. Internal combustion engine according to at least one of claims 1 to 14, **characterized in that** said lubricating oil pump (44) is located at a height which is below the height of the switch valves (47).

17. Internal combustion engine according to at least one of the preceding claims 1 to 16, **characterized in that** said lubricating oil pump (44) is located at a front side beneath a crank chamber or a balancer chamber (27) of the engine, said balancer chamber (27) is disposed below said crank chamber.

18. Internal combustion engine according to claim 17, **characterized in that** said lubricating oil pump (44) is driven by the rotation of a balancer shaft (28) which rotates within the balancer chamber (27), and which rotates in the opposite direction relative to a crankshaft (12), which is disposed above the balancer shaft (28).

19. Internal combustion engine according to at least one of claims 1 to 18, **characterized in that** said lubricating oil pump (44) and said switch valves (47) are located on the lower part of the engine (1) and in close proximity relative to each other.

20. Internal combustion engine according to at least one of the preceding claims 4 to 19, **characterized in that** said lubricating oil pump (44) comprises one inlet connected with the single supplying line (51) and six outlets each connected with one of said oil conduits (50).

21. Internal combustion engine according to at least one of the preceding claims 1 to 20, **characterized in that** said areas to be lubricated comprise a sliding surface of a piston (7) of a cylinder block (2) of said engine (1).

22. Internal combustion engine according to claim 21, **characterized in that** said sliding surface of the piston (7) is supplied by lubricating oil via one oil hole (2f), which passes through the cylinder block (2) in a direction perpendicular to the crankshaft (12), said oil holes (2f) are displaced from a cylindrical axis (A) throughout the crankshaft (12) direction, and said oil holes (2f) are positioned between rings on the pistons (7) when the pistons (7) are at the lower dead points.

23. Internal combustion engine according to claim 22 **characterized in that** said crankshaft (12) is axially supported by main bearings (39) and in that said areas to be lubricated comprise said main bearings (39), which are supplied with lubricating oil via a bearing oil hole within the cylinder block (2).

24. Internal combustion engine according to claim 23, **characterized in that** said main bearing (39) to be lubricated is a roller bearing.

25. Internal combustion engine according to at least one of the preceding claims 21 to 24, **characterized in that** said engine (1) comprises three cylinders, three areas to be lubricated at the main bearing of said crankshaft (12), and three areas to be lubricated at the sliding surface of the piston (7).

26. Internal combustion engine according to at least one of the preceding claims 1 to 25, **characterized in that** said engine (1) is disposed within said vehicle in a vertically inclined manner, whereby a top portion of the engine (1) is inclined towards the rear of the vehicle.

27. Internal combustion engine according to claim 26, **characterized in that** said engine comprises a fly wheel (60) which has a ring gear (60b) which meshingly engages with a gear of a starter motor, wherein said starter motor is disposed in front of said engine and at a height of approximately said crank case.

## Patentansprüche

1. Brennkraftmaschine, insbesondere Zweitaktverbrennungsmotor des Kurbelgehäuse-Verdichtungstyps, mit einem Schmiersystem, wobei das Schmiersystem umfaßt:
einen Schmieröltank (42),
eine Ölversorgungs-Leitungsanordnung zum Verbinden des Öltanks (42) mit den zu schmierenden Bereichen,
eine Schmierölpumpe (44) zur Versorgung der zu schmierenden Bereiche mittels Schmieröl aus dem Öltank (42) durch die Ölversorgungs-Leitungsanordnung, und eine Ölrückführanordnung zum Rückführen des Schmieröls zurück zum Öltank (42),
**dadurch gekennzeichnet,** daß die Ölrückführanordnung einen Ölrückführstab enthält, der eine Vielzahl von Einlässen zum Sammeln von Öl aufweist, und einen einzelnen Auslaß, der ihn durch eine einzelne Rückführleitung (52) mit dem Öltank (42) verbindet,
wobei die Einlässe des Ölrückführstabes mit Schaltventilen (47) zum jeweiligen wahlweisen Versorgen der zu schmierenden Stellen des Motors mit Schmieröl verbunden sind, und
daß das Schaltventil (47) und der einzelne Ölrückführstab (48) an dem Motor mittels einer gemeinsamen Trägerplatte (41) montiert sind.

2. Brennkraftmaschine nach Anspruch 1, **dadurch gekennzeichnet,** daß die Schaltventile (47) als Dreiwegeschaltventile ausgebildet sind mit einer Öleinlaßöffnung (47a), die mit der Schmierölpumpe (44) verbunden ist, einer Ölversorgungsauslaßöffnung (47b), die mit zu schmierenden Bereichen verbunden ist, und einer Ölrückführauslaßöffnung (47c), die mit dem Ölrückführstab (48) verbunden ist.

3. Brennkraftmaschine nach Anspruch 1 oder 2, **dadurch gekennzeichnet,** daß die Schaltventile (47) Magnetventile sind.

4. Brennkraftmaschine nach einem der Ansprüche 1 bis 3, **dadurch gekennzeichnet,** daß die Ölversorgungs-Leitungsanordnung Ölleitungen (50) umfaßt, die jeweils mit der Schmierölpumpe (44) und den Schaltventilen (47) für jeden der direkt zu schmierenden Bereiche des Motors umfaßt.

5. Brennkraftmaschine nach Anspruch 4, **dadurch gekennzeichnet,** daß jeder der Ölleitungen (50) mit einem Rückschlagventil (45) und einem Sieb (46) ausgestattet ist.

6. Brennkraftmaschine nach zumindest einem der Ansprüche 1 bis 5, **dadurch gekennzeichnet,** daß jeder der Schaltventile (47) durch eine elektronische Steuereinheit (71) gesteuert wird, wobei die elektronische Steuereinheit (71) bestimmt, ob eine vorbestimmte Menge von zu versorgendem Öl für die zu schmierenden Bereiche bereits erreicht ist, so daß die Schaltventile (47) geschaltet werden, und das Öl zu dem Ölrückführstab (48) abgeleitet wird, wenn diese vorbestimmte Menge erreicht worden ist.

7. Brennkraftmaschine nach Anspruch 6, **dadurch gekennzeichnet,** daß die elektronische Steuereinheit (71) den gesammelten Schmierölverbrauch pro Umdrehung der Brennkraftmaschine (1) aufgrund eines von einem Motordrehzahlsensor (72) ausgegebenen Signals (a) der Umdrehungen des Motors pro Minute und eines Lastsignals (b), das von einem Beschleunigungsöffnungs-Erkennungssensor ausgegeben wird, erkennt, und dann Schaltsignale (S1, S2) für einen benötigten Zeitabschnitt ausgibt und so die Schaltventile (47) dazu veranlaßt, die Versorgungsauslaßöffnung (47b) für den vorbestimmten Zeitabschnitt freizuschalten.

8. Brennkraftmaschine nach wenigstens einem der voranstehenden Ansprüche 1 bis 7, **dadurch gekennzeichnet,** daß eine einzelne Rückführleitung (52) und eine einzelne Versorgungsleitung (51), die einen Ölfilter (43) und die Schmierölpumpe (44) verbindet, einen biegbaren Leitungsübergang enthält.

9. Brennkraftmaschine nach Anspruch 8, **dadurch gekennzeichnet,** daß der biegbare Leitungsabschnitt mittels eines Schlauches ausgebildet ist.

10. Brennkraftmaschine nach wenigstens einem der voranstehenden Ansprüche 1 bis 9, **dadurch gekennzeichnet,** daß die einzelne Rückführleitung (52) mit dem Schmieröltank (42) verbunden ist.

11. Brennkraftmaschine nach wenigstens einem der voranstehenden Ansprüche 1 bis 10, **dadurch gekennzeichnet,** daß der Schmieröltank (42) an dem Fahrzeugchassis befestigt ist.

12. Brennkraftmaschine nach wenigstens einem der voranstehenden Ansprüche 1 bis 11, **dadurch gekennzeichnet,** daß die Schmierölpumpe (44), die Rückschlagventile (45), die Siebe (46), die Schaltventile (47) und der Ölrückführstab (48) an dem Motor (1) befestigt sind.

13. Brennkraftmaschine nach Anspruch 12, **dadurch gekennzeichnet,** daß die Trägerplatte (61) an einer vorderen Seitenwand eines Kompressors (55) der Brennkraftmaschine (1) mittels eines flexiblen Materials, welches die Übertragung von Schwingungen, die von dem Motor (1) ausgehen, reduziert, befestigt ist.

14. Brennkraftmaschine nach wenigstens einem der Ansprüche 2 bis 13, **dadurch gekennzeichnet,** daß die Versorgungsauslaßöffnung (47b) der Schaltventile (47) in einer Höhe angeordnet sind, die unterhalb der Höhe der zu schmierenden Bereiche liegt.

15. Brennkraftmaschine nach wenigstens einem der voranstehenden Ansprüche 1 bis 14, **dadurch gekennzeichnet,** daß der Schmieröltank (42) in einer Höhe angeordnet ist, die oberhalb der Höhe der zu schmierenden Bereiche liegt.

16. Brennkraftmaschine nach wenigstens einem der Ansprüche 1 bis 14, **dadurch gekennzeichnet,** daß die Schmierölpumpe (44) in einer Höhe angeordnet ist, die unterhalb der Höhe der Schaltventile (47) liegt.

17. Brennkraftmaschine nach wenigstens einem der voranstehenden Ansprüche 1 bis 16, **dadurch gekennzeichnet,** daß die Schmierölpumpe (44) an einer vorderen Seite unterhalb einer Kurbelkammer oder einer Ausgleichskammer (27) des Motors angeordnet ist, wobei die Ausgleichskammer (27) unterhalb der Kurbelkammer angeordnet ist.

18. Brennkraftmaschine nach Anspruch 17, **dadurch gekennzeichnet,** daß die Schmierölpumpe (44) durch die Umdrehung einer Ausgleichswelle (28) angetrieben wird, die sich innerhalb der Ausgleichskammer (27) dreht und die in der entgegengesetzten Richtung, bezogen zur Kurbelwelle 12, welche oberhalb der Ausgleichswelle (28) angeordnet ist, dreht.

19. Brennkraftmaschine nach wenigstens einem der Ansprüche 1 bis 18, **dadurch gekennzeichnet,** daß die Schmierölpumpe (44) und die Schaltventile (47) in einem unteren Bereich des Motors (1) und in jeweils großer Nähe zueinander angeordnet sind.

20. Brennkraftmaschine nach wenigstens einem der voranstehenden Ansprüche 4 bis 19, **dadurch gekennzeichnet,** daß die Schmierölpumpe (44) einen Einlaß aufweist, der mit einer einzelnen Versorgungsleitung (51) verbunden ist und sechs Auslässe aufweist, von denen jeder mit einer der Ölleitungen (50) verbunden ist.

21. Brennkraftmaschine nach wenigstens einem der voranstehenden Ansprüche 1 bis 20, **dadurch gekennzeichnet,** daß die zu schmierenden Bereiche einen Oberflächengleitbereich eines Kolbens (7) eines Zylinderblocks (2) des Motors (1) enthalten.

22. Brennkraftmaschine nach Anspruch 21, **dadurch gekennzeichnet,** daß die Gleitoberfläche des Kolbens (7) mit Schmieröl durch ein Ölloch (2f) versorgt wird, das durch den Zylinderblock (2) in einer Richtung führt, die senkrecht zur Kurbelwelle (12) ist, und daß Öllöcher (2f) von einer Zylinderachse (A) im ganzen Bereich der Richtung der Kurbelwelle (12) versetzt sind, und daß die Öllöcher (2f) zwischen den Ringen auf den Kolben (7) angeordnet sind, wenn die Kolben (7) in ihrer unteren Totpunktposition sich befinden.

23. Brennkraftmaschine nach Anspruch 22, **dadurch gekennzeichnet,** daß die Kurbelwelle (12) in ihrer Längsrichtung durch Hauptlager (39) gehaltert wird, und daß die zu schmierenden Bereiche dieser Hauptlager (39) enthalten, die mit Schmieröl mittels eines Lagerölloches innerhalb des Zylinderblockes (2) mit Schmieröl versorgt werden.

24. Brennkraftmaschine nach Anspruch 23, **dadurch gekennzeichnet,** daß das zu schmierende Hauptlager (39) als Rollenlager ausgebildet ist.

25. Brennkraftmaschine nach wenigstens einem der voranstehenden Ansprüche 21 bis 24, **dadurch gekennzeichnet,** daß der Motor (1) drei Zylinder, drei zu schmierende Bereiche an dem Hauptlager der Kurbelwelle (12) und drei zu schmierende Bereiche an den Gleitoberflächen der Kolben (7) umfaßt.

26. Brennkraftmaschine nach wenigstens einem der voranstehenden Ansprüche 1 bis 25, **dadurch gekennzeichnet,** daß der Motor (1) innerhalb des Fahrzeuges in einer vertikal geneigten Art und Weise angeordnet ist, wobei ein oberer Bereich des Motors (1) zur Rückseite des Fahrzeuges hin geneigt ist.

27. Brennkraftmaschine nach Anspruch 26, **dadurch gekennzeichnet,** daß der Motor ein Schwungrad (60) umfaßt, welches einen Zahnkranz (60b) aufweist, der in Eingriff mit einem Zahnrad eines Anlassermotors bringbar ist, wobei der Anlassermotor vor dem Motor und in einer Höhe angeordnet ist, die ungefähr der des Kurbelgehäuses entspricht.

## Revendications

1. Moteur à combustion interne, en particulier moteur à deux temps du type à compression dans le carter de vilebrequin, comprenant un système de lubrification, ledit système de lubrification étant constitué :
- d'un réservoir (42) à huile de lubrification,
- d'un agencement de conduits d'alimentation en huile destiné à relier ledit réservoir d'huile (42) à des zones du moteur qui doivent être lubrifiées,
- d'une pompe (44) à huile de lubrification destinée à fournir du lubrifiant provenant dudit réservoir d'huile (42) auxdites zones qui doivent être lubrifiées par l'intermédiaire dudit agencement àe conduits d'alimentation en huile,
- et d'un agencement de retour d'huile destiné à ramener du lubrifiant audit réservoir d'huile (42),
**caractérisé en ce que**
- ledit agencement de retour d'huile comprend une rampe de retour d'huile, comportant une pluralité d'orifices d'entrée destinés à recueillir de l'huile et un orifice de sortie unique destiné à le connecter, par l'intermédiaire d'un conduit de retour unique (52), audit réservoir (42) d'huile,
- lesdits orifices d'entrée de ladite rampe de retour d'huile étant connectés à des valves de commutation (47) en vue de fournir sélectivement de l'huile aux emplacements du moteur qui doivent respectivement être lubrifiés,
- ladite valve de commutation (47) et ladite rampe (48) de retour d'huile unique étant montées sur ledit moteur par l'intermédiaire d'une plaque de support commune (61).

2. Moteur à combustion interne selon la revendication 1, **caractérisé en ce que** lesdites valves de commutation se présentent sous forme de trois valves de commutation à trois voies, comportant un orifice d'entrée d'huile (47a) relié à ladite pompe (44) à huile de lubrification, un orifice de sortie (47b) d'alimentation en huile relié aux zones qui doivent être lubrifiées et un orifice de sortie de retour d'huile (47c) relié à ladite rampe (48) de retour d'huile.

3. Moteur à combustion interne selon la revendication 1 ou 2, **caractérisé en ce que** lesdites valves de commutation (47) sont des valves à solénoïde.

4. Moteur à combustion interne selon l'une des revendications 1 à 3, **caractérisé en ce que** ledit agencement de conduits d'alimentation en huile comprend des conduits d'huile (50) connectés à ladite pompe (44) à huile de lubrification, et auxdites valves de commutation (47) affectées respectivement à chacune desdites zones du moteur qui doivent être directement lubrifiées.

5. Moteur à combustion interne selon la revendication 4, **caractérisé en ce que** chacun desdits conduits d'huile (50) est équipé d'un clapet anti-retour (45) et d'un filtre (46).

6. Moteur à combustion interne selon au moins l'une des revendications 1 à 5, **caractérisé en ce que** chacune des valves de commutation (47) est commandée par un ensemble de commande électronique (71), ledit ensemble de commande électronique (71) établissant si une quantité prédéterminée d'alimentation en huile est atteinte pour lesdites zones qui doivent être lubrifiées de façon telle que lesdites valves de commutation (47) soient commutées et que l'huile soit détournée vers la rampe (48) de retour d'huile au cas où ladite quantité prédéterminée a été atteinte.

7. Moteur à combustion interne selon la revendication 6, **caractérisé en ce que** ledit ensemble de commande électronique (71) établit quelle est la consommation d'huile d'alimentation cumulée pour chaque tour du moteur à combustion interne (1) sur la base d'un signal (a) de vitesse de rotation du moteur provenant d'un capteur (72) de tours/mn (RPM) d'un moteur et d'un signal de charge (b) provenant d'un capteur de détection d'ouverture d'accélérateur, et il délivre alors des signaux de commutation (S1, S2) pendant le temps nécessaire pour provoquer la commutation des valves de commutation (47), afin d'effectuer une commutation vers l'orifice de sortie d'alimentation (47b) pendant le temps prescrit.

8. Moteur à combustion interne selon au moins l'une des revendications précédentes 1 à 7, **caractérisé en ce que** ledit conduit de retour unique (52), ainsi qu'un conduit d'alimentation unique (51) qui relie un filtre à huile (43) à ladite pompe (44) à huile de lubrification, comprennent un tronçon de conduit souple.

9. Moteur à combustion interne selon la revendication 8, **caractérisé en ce que** ledit tronçon de conduit souple est constitué par un tuyau.

10. Moteur à combustion interne selon au moins l'une des revendications précédentes 1 à 9, **caractérisé en ce que** ledit conduit de retour unique (52) est connecté audit réservoir (42) d'huile de lubrification.

11. Moteur à combustion interne selon au moins l'une des revendications précédentes 1 à 10, **caractérisé en ce que** ledit réservoir (42) d'huile de lubrification est monté sur une carrosserie de véhicule.

12. Moteur à combustion interne selon au moins l'une des revendications précédentes 1 à 11, **caractérisé en ce que** ladite pompe (44) à huile de lubrification, lesdits clapets anti-retour (45), lesdits filtres (46), lesdites valves de commutation (47) et ladite rampe (48) de retour d'huile, sont montés sur le moteur (1).

13. Moteur à combustion interne selon la revendication 12, **caractérisé en ce que** ladite plaque de support (61) est fixée sur une paroi du côté avant d'un compresseur (55) du moteur à combustion interne (1) au moyen d'un matériau élastique qui réduit la transmission des vibrations provenant du moteur (1).

14. Moteur à combustion interne selon au moins l'une des revendications 2 à 13, **caractérisé en ce que** lesdits orifices de sortie d'alimentation (47b) desdites valves de commutation (47) sont situées à une hauteur qui est inférieure à la hauteur des zones qui doivent être lubrifiées.

15. Moteur à combustion interne selon au moins l'une des revendications précédentes 1 à 14, **caractérisé en ce que** ledit réservoir (42) à huile de lubrification est situé à une hauteur qui est supérieure à la hauteur des zones qui doivent être lubrifiées.

16. Moteur à combustion interne selon au moins l'une des revendications 1 à 14, **caractérisé en ce que** ladite pompe (44) à huile de lubrification est située à une hauteur qui est inférieure à la hauteur des valves de commutation (47).

17. Moteur à combustion interne selon au moins l'une des revendications précédentes 1 à 16, **caractérisé en ce que** ladite pompe (44) à huile de lubrification est située sur un côté avant, sous une chambre de vilebrequin ou une chambre (27) d'arbre d'équilibrage du moteur, ladite chambre (27) d'arbre d'équilibrage étant disposée sous ladite chambre de vilebrequin.

18. Moteur à combustion interne selon la revendication 17, **caractérisé en ce que** ladite pompe (44) à huile de lubrification est entraînée par la rotation d'un arbre d'équilibrage (28) qui tourne dans le carter (27) d'arbre d'équilibrage et qui tourne dans le sens opposé au sens de rotation d'un vilebrequin (12) qui est disposé au-dessus de l'arbre d'équilibrage (28).

19. Moteur à combustion interne selon au moins l'une des revendications 1 à 18, **caractérisé en ce que** ladite pompe (44) à huile de lubrification et lesdites valves de commutation (47) sont situées sur la partie inférieure du moteur (1) et à proximité immédiate les unes des autres.

20. Moteur à combustion interne selon au moins l'une des revendications précédentes 4 à 19, **caractérisé en ce que** ladite pompe (44) à huile de lubrification comprend un seul orifice d'entrée raccordé au conduit d'alimentation unique (51) et six orifices de sortie raccordés chacun à un desdits conduits (50) d'huile.

21. Moteur à combustion interne selon au moins l'une des revendications précédentes 1 à 20, **caractérisé en ce que** lesdites zones qui doivent être lubrifiées comportent une surface de glissement d'un piston (7) d'un bloc-moteur (2) dudit moteur (1).

22. Moteur à combustion interne selon la revendication 21, **caractérisé en ce que** ladite surface de glissement du piston (7) est alimentée en huile de lubrification par l'intermédiaire d'un trou à huile (2f) qui traverse le bloc-moteur (2) dans une direction perpendiculaire au vilebrequin (12), en ce que lesdits trous (2f) à huile sont décalés par rapport à un axe (A) de cylindre, sur toute la direction du vilebrequin (12), et en ce que lesdits trous (2f) à huile sont positionnés entre des segments placés sur les pistons (7) lorsque les pistons (7) sont à leur point mort bas.

23. Moteur à combustion interne selon la revendication 22, **caractérisé en ce que** ledit vilebrequin (12) est supporté axialement par des paliers principaux (39) et en ce que lesdites zones qui doivent être lubrifiées comprennent lesdits paliers principaux (39) qui sont alimentés en huile de lubrification par l'intermédiaire d'un trou pour huile de palier situé à l'intérieur du bloc-moteur (2).

24. Moteur à combustion interne selon la revendication 23, **caractérisé en ce que** ledit palier principal (39) qui doit être lubrifié est un roulement à billes.

25. Moteur à combustion interne selon au moins l'une des revendications précédentes 21 à 24, **caractérisé en ce que** ledit moteur (1) comprend trois cylindres, trois zones qui doivent être lubrifiées sur le palier principal dudit vilebrequin (12) et trois zones qui doivent être lubrifiées sur la surface de glissement du piston (7).

26. Moteur à combustion interne selon au moins l'une des revendications précédentes 1 à 25, **caractérisé en ce que** ledit moteur (1) est disposé dans ledit véhicule, de manière inclinée verticalement, une partie supérieure du moteur (1) étant inclinée vers l'arrière du véhicule.

27. Moteur à combustion interne selon la revendication 26, **caractérisé en ce que** ledit moteur comprend un volant (60) qui comporte une couronne dentée (60b) qui engrène avec un pignon denté d'un moteur de démarrage, ledit moteur de démarrage étant disposé en face dudit moteur et approximativement à la hauteur dudit carter de vilebrequin.
